Europäisches Patentamt

**European Patent Office**

**Office européen des brevets**

(19)

(11) Publication number: **0 150 543**
A1

(12) # EUROPEAN PATENT APPLICATION

(21) Application number: **84300368.2**

(22) Date of filing: **20.01.84**

(51) Int. Cl.⁴: **B 23 K 9/12,** B 23 K 9/235

(43) Date of publication of application: **07.08.85**
**Bulletin 85/32**

(84) Designated Contracting States: **BE DE FR GB IT LU NL SE**

(71) Applicant: **WESTINGHOUSE ELECTRIC CORPORATION, Westinghouse Building Gateway Center, Pittsburgh Pennsylvania 15235 (US)**

(72) Inventor: **Stol, Israel, 209 East Patty Lane, Monroeville Pennsylvania (US)**

(74) Representative: **van Berlyn, Ronald Gilbert, 23, Centre Heights, London, NW3 6JG (GB)**

(54) **Method and apparatus for arc welding.**

(57) An arc welding process using consumable wire electrode is provided with a preheating step in which a consumable wire electrode is heated prior to insertion into the electrode stick-out region. This is accomplished by the circulation of current from an independent preheating power supply (24) through a segment of the wire using first and second contact members (14, 26) which are disposed at a fixed relative distance, contacting the consumable electrode (16). The first and second contact members (14, 26) are separated by a short dielectric sleeve (28) which may axially abut the contact members. The consumable electrode (16) is well supported in the stick-out region from buckling. Weld quality is better by using an independent preheating source; also welding current is reduced since the welding current per se does not have to fulfill the preheating function. Both gas-metal and gas-tungsten arc welding processes are disclosed, along with apparatus used in these processes.

# METHOD AND APPARATUS FOR ARC WELDING

## BACKGROUND AND SUMMARY OF THE INVENTION

This invention relates generally to arc welding and more particularly to arc welding methods and apparatus in which the heat content of an alloyed wire being deposited and the associated wire feed rate are controlled independently of the welding current.

In conventional gas-metal arc welding (GMAW) processes, heating of the alloyed consumable electrode wire prior to deposition is accomplished by passing welding current through a certain wire length, commonly referred to as the wire stick-out. The power consumed in heating this wire is equal to the product of the square of the welding current and the resistance of the wire ($I^2R$). In order to increase the wire deposition rate, the heat content of the wire is increased by increasing the electrical stick-out or the welding current or both.

Excessive wire stick-out in the prior art has led to uncontrolled wire wandering and/or poor deposit quality. It is therefore more convenient to use welding current as the predominant variable to determine and control deposition rate and mode of metal transfer through the arc. However, current intensification leads to more power dissipation in the arc. Since approximately 65 to 85% of the arc heat is conducted into the base metal, a higher current would increase arc penetration while increasing deposition rate and decreasing dilution. Although dilution can be reduced by employing higher welding current and slower speeds of travel, these means of control have practical limitations. Higher heat input per unit of length can generate excessive assembly distortion and metallurgical damage in both the deposit and base metal, such as heat affected zone (HAZ) underbed cracking and hot cracking.

In the conventional hot wire gas-tungsten arc welding (HWGTAW) process, heating of the alloyed consumable electrode wire prior to deposition is accomplished by passing a heating current through a certain length of wire stick-out. As in the GMAW process, higher wire heat content is adjusted by increasing wire stick-out or increasing welding current or both. This makes the HWGTAW process subject to similar difficulties experienced by the GMAW process. The present invention seeks to overcome these difficulties by preheating the wire remotely from the arc and molten pool, thereby reducing the required welding current and maintaining a constant-reduced wire stick-out length.

The method and apparatus of the present invention represent an inventive step over prior art arc welding processes by providing for more controlled preheating of the alloyed wire prior to its entry into the stick-out region. In a gas-metal arc welding method where a power supply feeds welding current through a welding wire electrode into a metal workpiece, the present invention adds a preheating step whereby the wire heat content is increased by means other than the welding current. By increasing the heat content of the wire in this manner, a significant reduction in weld dilution is achieved. One means of preheating the wire is to pass current through a wire segment prior to the wire's entry into the stick-out region. It is conceivable that the control of the magnitude of the preheating source current in this invention can be automated, thereby facilitating use of the welder apparatus of this invention with a robot.

In a hot wire gas-tungsten arc welding process where an arc between a permanent tungsten electrode and the workpiece creates a pool of molten metal into which a heated welding wire is fed, again the present invention adds the step of preheating the wire under constant wire stick-out length. This limits the length of wire stick-out required to reach a desired wire temperature for a given current in the wire, thereby minimizing wire wandering, improving deposit quality and minimizing arc-wire interaction.

Welding apparatus in accordance with the present invention includes means for preheating welding wire such that wire heat content can be controlled independently of welding current or wire feed rate. This provides for improved control over prior art welding processes.

The invention in its broad form comprises a welding apparatus for welding a metal workpiece using a consumable electrode, comprising: a first source of electric power for welding, connected between a first electrode contact member and the workpiece, a second source of electric power independent from said first source and connected for electrode-preheating between said first electrode contact member and a second electrode contact member, wherein said first and second electrode contact members are spaced apart in a preheating zone by a fixed distance of dielectric gap and disposed in sliding electrical contact with and on said consumable electrode, said second source including means to control and vary a preheating current supply between said first and second electrode contact members, said first and second contact members being shaped to physically support substantially an entire portion of said consumable electrode in said preheating zone.

A more detailed understanding of the invention may be had from the following description of a preferred embodiment to be studied in conjunction with the accompanying drawings wherein:

Figure 1 shows a prior art gas-metal arc welding apparatus;

Figure 2 shows an embodiment of a gas-metal arc welding apparatus in accordance with an embodiment of the present invention;

Figure 3 shows a prior art gas-tungsten arc welding apparatus; and

Figure 4 shows an embodiment of a gas-tungsten arc welding apparatus in accordance with an embodiment of the present invention.

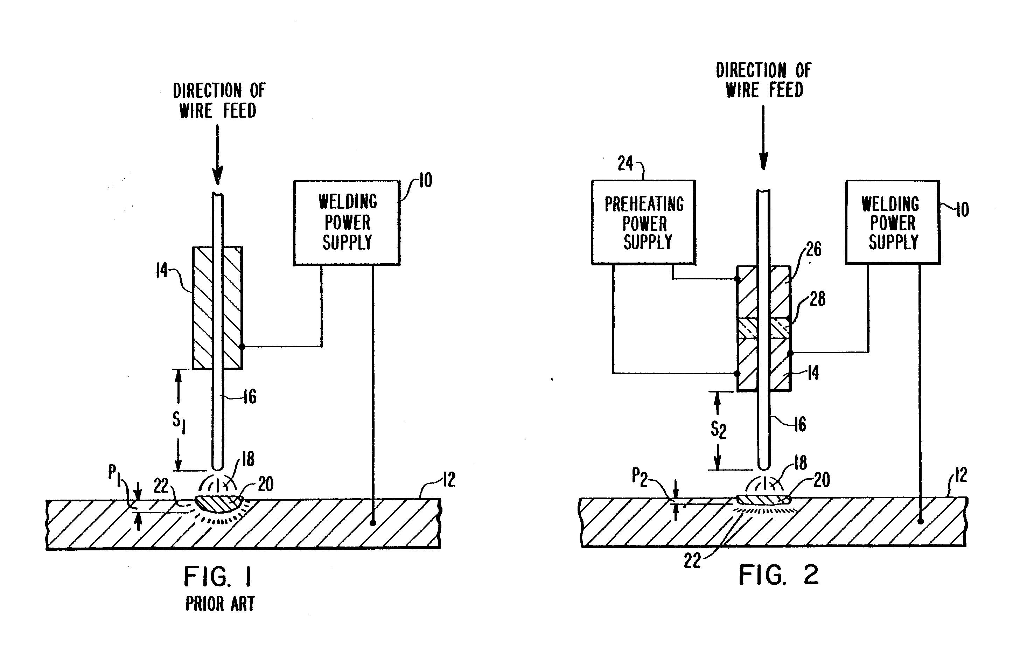

A clear presentation of the present invention can be achieved by first referring to the prior art gas-metal arc welding apparatus of Figure 1. Direct current welding power supply 10 is connected between workpiece 12 and electrode contact tip 14. Welding wire 16 is a consumable electrode which is maintained in electrical contact with electrode contact tip 14 and fed by known feeding means toward workpiece 12. As consumable electrode 16 approaches workpiece 12, arc 18 is created and deposition of consumable electrode 16 begins. The penetration of weld 20 into workpiece 12 is designated as $P_1$. The heat affected zone 22 can be seen under weld 20.

In the gas-metal arc welding process as performed with the apparatus of Figure 1, current passing through consumable electrode 16 over stick-out length $S_1$ acts to heat electrode 16 by dissipating power equivalent to the square of the welding current times the resistance of electrode ($I^2R$). Increasing the electrode heat content is accomplished by increasing welding current or by increasing stick-out length or both. These techniques can lead to poor deposit quality, excessive penetration and excessive electrode wandering.

Figure 2 shows a gas-metal arc welding apparatus in accordance with an embodiment of the present invention. Preheating power supply 24 is connected between electrode contact tips 14 and 26, which are separated by a dielectric material 28. The electrode contact tips 14, 26 together with the dielectric material 28 substantially enclose the preheated portion of the electrode, which portion is of fixed length. A preferred dimension for the dielectric gap axially is about 12.5 mm for an electrode diameter in the range of 1.1 mm. Also, the preheated portion of the electrode is mechanically well supported substantially over the entire length of the preheated portion, by the contact tips 14, 26 and dielectric sleeve 28. When consumable electrode 16 is fed toward the workpiece by known feeding means and makes contact with contact tips 14 and 26, current flows through the segment of electrode located between these contact tips thereby preheating the electrode before it reaches the stick-out region $S_2$. It should be apparent to those skilled in the art that the amount of preheating can easily be adjusted independently of the feeding rate. Additional heating occurs in the stick-out region due to welding current through the electrode. However, less welding current will be needed to reach a given electrode temperature. In addition, the stick-out length can be reduced, thereby causing a stiffer stick-out length and providing greater control of electrode position. These benefits are achieved in the present invention gas-metal arc welding process by adding an improved preheating step to the prior art process.

The use of this improved preheating step in the gas-metal arc welding process reduces the arc force and penetration, thereby reducing metallurgical damage and reducing distortion of the weld assembly. Penetration $P_2$ and percent dilution are reduced while the range of controllable deposition rates increases. Larger diameter wires could be used to achieve enhanced deposition rates and wire rigidity with a smaller increase in welding current than required by a prior art GMAW process.

Improved preheating of the wire segment would also bake out part of the volatile contaminants adhering to the wire's surface, such as moisture and drawing compounds. This would occur away from the gas shielding cone, thus reducing the potential disruption of arc stability and the solution of detrimental constituents, such as hydrogen, by the molten pool.

Preheating when done as described herein also promotes ready transfer to the spray metal transfer mode and reduces spatter. The use of multiple preheated wires can result in a high productivity cladding process.

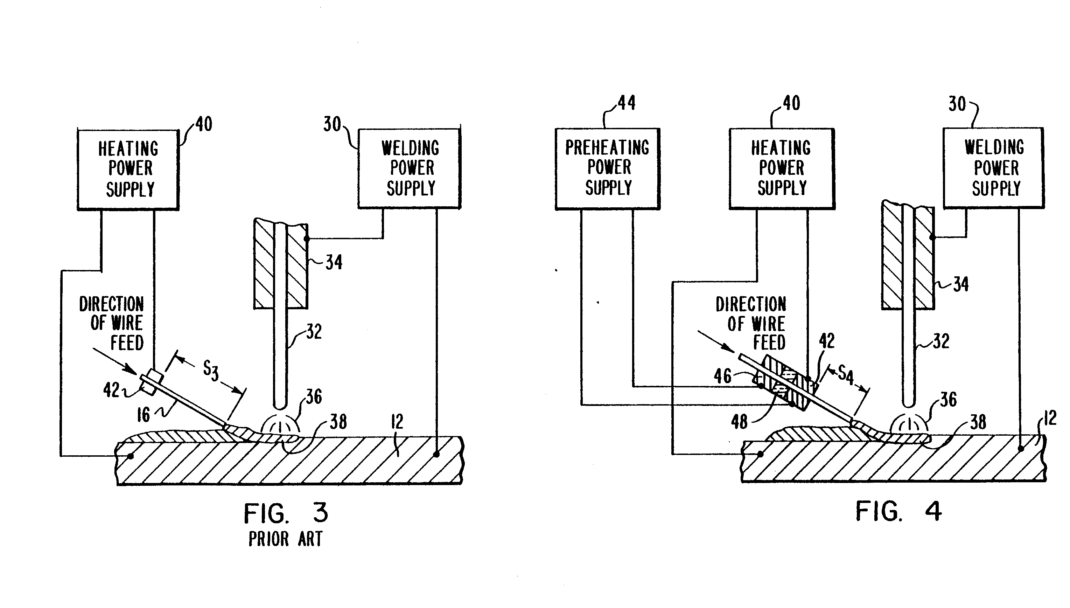

Figure 3 shows a prior art hot wire gas-tungsten arc welding apparatus in which a direct current welding power supply 30 is connected to a nonconsumable electrode 32, via a contact tip 34, and a workpiece 12. An arc 36 between electrode 32 and workpiece 12 creates a molten pool of metal 38 on the surface of workpiece 12. Heating power supply 40 is connected between consumable electrode contact tip 42 and workpiece 12. When consumable electrode 16 is fed into molten pool 38 while maintaining contact with electrode contact tip 42, current flows through stick-out segment $S_3$, thereby heating consumable electrode 16. As in the GMAW process, heat content of the consumable electrode is controlled by controlling electrode current or electrode stick-out length or both. The range of deposition rates in the prior art hot wire GTAW process is restricted by the limited rigidity of consumable electrode in the stick-out region and by electromagnetic arc deflection by the heating current when it approaches approximately 40% of the magnitude of the welding current.

Figure 4 shows a gas-tungsten arc welding apparatus in accordance with an embodiment of the present invention. The contact tips 42, 46 together with the dielectric material 48 substantially enclose a portion of the consumable electrode and also mechanically support the preheated zone of the electrode over substantially the entire length between the contact tips. Preheating power supply 44 is connected to electrode contact tips 42 and 46 which are separated by a dielectric material 48. When consumable electrode 16 makes contact wth electrode contact tips 42 and 46, current flows through the segment of electrode located between these contact tips, thereby preheating the electrode before it reaches stick-out region $S_4$. The use of a preheating step in this process allows for shorter wire stick-out and enhanced wire rigidity at any given deposition rate, thereby providing a broadened range of deposition rates. Shorter wire stick-out and enhanced rigidity also make wire position adjustment, wire wandering, and wire straightening less critical. Current in the wire preheating segment can be adjusted to compensate for reduced heating from the prior art heating current due to the reduced stick-out length.

Preheating power supply 44 can utilize either alternating or direct current to supply the required wire heating. Since the preheating current flows remotely from the molten pool 38 and welding arc 36, its magnitude has no effect on electromagnetic arc deflection. The use of a preheating step in the present invention provides the additional advantage that alloys with low electrical resistivities, such as copper or aluminum, can be deposited by the hot wire GTAW process. Without preheating, electromagnetic arc deflection occurs when the required magnitude of AC heating current is achieved.

In order to further illustrate the invention, the calculated effects of adding a preheating step to a solid wire GMAW process can be shown. Using a carbon steel welding alloy with a wire diameter of 0.045 inch, a wire feed rate of 310 inches per minute, and a stick-out of 0.75 inch, the welding current is 235 amperes and the voltage drop across the arc and wire is 26 volts. In a prior art apparatus as shown in Figure 1, the power delivered to the wire stick-out amounts to 84.78% of the power required to melt the wire. This corresponds to an average wire temperature of 347°C.

By adding a preheating step, the power used to preheat the wire can be set at 80% of the melting power and the wire stick-out can be reduced to 0.5 inch, thereby

8 **0150543**

improving wire rigidity. In order to achieve a wire temperature of 347°C in the preheated wire segment with 80% of the melting power supplied, the preheating power supply must deliver 4 volts and 278 amperes across the preheated wire segment.

Without preheating, the total power dissipation in the arc and heating is 6110 watts. With 80% of the melting power supplied by a preheater power supply, the power dissipated in the arc becomes 4991 watts. The conventional GMAW process would require a welding current of 235 amperes to support an 8.48 pound per hour deposition rate, while only 119 amperes of welding current would be required for the same deposition rate when a preheating power supply supplies 80% of the wire melting power.

The consumable electrode contacts would have to be cooled in such a system to prevent overheating. However, this would not adversely affect the heat content of the wire since the contact area between the hot wire and contact tip is small, wire feed rates override wire cooling rates, and thermal resistance between the wire and the contact tip is high.

The benefits of this invention have been demonstrated in a gas-metal arc welding process where the consumable electrode was an Inconel 82 wire, 1.5 mm in diameter, which was fed toward a workpiece at a rate of 6275 mm per minute, with a wire stick-out length of 40 mm. Using a conventional welding process, as represented by Figure 1, a welding current of 300 DC amperes with a voltage across the wire and arc equal to 35 volts, resulted in a weld with an average dilution of 33% and an iron content of 15%.

When the process was modified in accordance with the present invention, as represented by Figure 2, the preheating power supply provided 162 amperes of alternating current to preheat the wire. Then a welding current of 210 DC amperes and a voltage across the wire and arc of 29 volts produced a weld with an average dilution of 4.5% and

9  0150543

an iron content of 2%, where 1% iron came from the filler wire.

Along with this significant reduction in dilution, welds made in accordance with this invention exhibit improved tie-in properties. In addition, the use of a lower welding current allows the use of a smaller welding torch, thereby increasing the versatility of welding apparatus which utilizes this invention. Although the preheating step of these examples was accomplished by passing an electric current through a segment of the consumable electrode, it should be apparent that other means of preheating also fall within the scope of this invention.

0150543

10

CLAIMS:

1. A welding apparatus for welding a metal workpiece using a consumable electrode, comprising:

a first source of electric power for welding, connected between a first electrode contact member and the workpiece, characterized by:

a second source of electric power independent from said first source and connected for electrode-preheating between said first electrode contact member and a second electrode contact member, wherein said first and second electrode contact members are spaced apart in a preheating zone by a fixed distance of dielectric gap and disposed in sliding electrical contact with and on said consumable electrode,

said second source including means to control and vary a preheating current supply between said first and second electrode contact members, said first and second contact members being shaped to physically support substantially an entire portion of said consumable electrode in said preheating zone.

2. Apparatus as in claim 1 wherein said dielectric gap comprises a short sleeve of dielectric material, said consumable electrode being threaded in said short sleeve, in use.

3. Apparatus as in claim 2 wherein said first and second electrode contact members comprise conducting sleeve like members both disposed axially abutting said short sleeve of dielectric material.

11 0150543

4. An arc welding process which uses a consumable electrode for welding a metal workpiece comprising the steps of:

providing first and second contact members in electrical contact with said consumable electrode, said first and second contact members being spaced by a fixed distance apart and separated by a dielectric gap;

connecting, for welding, a source of electrical power between said workpiece and said first electrode; characterized by connecting a second independent electrical power source for resistance preheating, between said first and second contact members;

varying in a controlled manner the magnitude of electrical preheating current from said independent power source for preheating a known length of the consumable electrode; and

physically supporting at least said known length of consumable electrode to prevent buckling thereof, by suitably shaping said first and second contact members.

5. A process wherein said step of physically supporting said known length of consumable electrode comprises providing a solid dielectric sleeve between and contacting said first and second contact members whereby said first contact member in association with the solid dielectric sleeve and the second contact member acts as a continuous sleeve, supporting the preheated consumable electrode.

6. A process wherein the step of varying the magnitude of preheating current is automated.

0150543

FIG. 1
PRIOR ART

FIG. 2

0150543

**FIG. 4**

WELDING POWER SUPPLY  30

HEATING POWER SUPPLY  40

PREHEATING POWER SUPPLY  44

34  32  36  38  12

DIRECTION OF WIRE FEED

42  46  48  S4

**FIG. 3**
PRIOR ART

WELDING POWER SUPPLY  30

HEATING POWER SUPPLY  40

34  32  36  38  12

DIRECTION OF WIRE FEED

42  16  S3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-2 619 306 (POLITECHNIKA GDANSKA) * Complete document * | 1 | B 23 K 9/12 B 23 K 9/235 |
| A | | 4 | |
| X | DE-A-2 228 701 (KJELLBERG-ESAB GMBH) * Complete document * | 4-6 | |
| A | | 1-3 | |

| TECHNICAL FIELDS SEARCHED (Int. Cl. ³) |
|---|
| B 23 K 9/00 |

The present search report has been drawn up for all claims

| Place of search | Date of completion of the search | Examiner |
|---|---|---|
| BERLIN | 28-06-1984 | WUNDERLICH J E |